# EUROPEAN PATENT APPLICATION

(11) **EP 1 619 613 A1**
(43) Date of publication of application: **25.01.2006**
(21) Application number: 04103492.7
(22) Date of filing: 21.07.2004
(51) Int. Cl.: G06Q 10/00

(54) **Method for modeling continuous accumulations of quantities over time**

(71) Applicant: SAP AG, 69190 Walldorf (DE)
(72) Inventor: Mantel, Rolf M., 69124 Heidelberg (DE); Glebe, Thorsten, 69181 Leimen (DE); Weber, Stephan, 69126 Heidelberg (DE)
(74) Representative: Schneider, Günther Martin

(57) **Abstract**

A method for modeling a plurality of quantities continuously accumulating over time by performing for each quantity of the plurality of quantities the following steps: determining separate time intervals and further determining the quantity accumulated in each time interval, and representing the separate time intervals and the quantity accumulated in each time interval in a table comprising a plurality of related data elements corresponding to the separate time intervals, each data element comprising a point in time in predetermined relation to the time interval and the quantity accumulated in the time interval.

## Description

This application relates the modeling of quantities which are continuously accumulating over time and more particularly to supply chain management (SCM) and planning involving such quantities.

The flow of goods and services from a point of origin to a point of consumption is known as supply chain and the management of interconnected processes involving one or more supply chains is known as supply chain management (SCM).

In supply chain management an assessment of availability, also called an availability check or available-to-promise (ATP), investigates whether a promised delivery can in fact be made, and if so when.

According to the state of the art modeling the availability of a particular product of a process or processes involving supply chains may follow a discrete model according to which the desired quantity of the product may become available only at the end of a planned period of time.

A time series denotes a series of consecutive points in time having one or more values associated with each point in time. Such a time series may represent altitudes read out from an altimeter 2, 5, 10, 30, and 60 minutes after the start of an aircraft, for instance, or numbers of items sold at certain times, etc.

The simulation and planning of processes which are long-running, which are involving mass production, or which have a high granularity, for instance, may often require dealing with quantities which have been accumulated during a certain period of production.

It may be necessary, for instance, to be able to confirm customer orders against the partial output of a process order existing at some time while the process is running.

Furthermore, it may be necessary to deal with portions of the output of a process order which may be available upon scheduled partial completion of a process order.

It is an object of the present invention to provide a method and a structure for modeling multiple quantities which are accumulating continuously over time. At a predetermined or scheduled time such quantities may only be partially completed.

This and other objects of the present invention are achieved by the method of claim 1 and the structure of claim 6.

According to one embodiment the present invention provides a method for modeling a plurality of quantities continuously accumulating over time by performing for each quantity of the plurality of quantities the following steps:
determining separate time intervals and further determining the quantity accumulated in each time interval, and
representing the separate time intervals and the quantity accumulated in each time interval in a table comprising
a plurality of related data elements corresponding to the separate time intervals, each data element comprising a point in time in predetermined relation to the time interval and the quantity accumulated in the time interval.

Preferably a starting point, a midpoint and an endpoint of a time interval may form the point in time in predetermined relation to the time interval.

Further preferably, the method according to the present invention may further comprise: converting the representation of at least one quantity of the plurality of quantities continuously accumulating over time to a discrete representation.

Preferably, the related data elements of the method according to the present invention may be sequentially related.

Further preferably, any of the methods may be used for supply chain management.

A further embodiment of the present invention provides a structure for modeling a quantity continuously accumulating over time,
representing separate time intervals and the quantity accumulated in each time interval in a table comprising
a plurality of related data elements corresponding to the separate time intervals, each data element comprising
a point in time in predetermined relation to the time interval and the quantity accumulated in the time interval.

Further preferably, one of a starting point, a midpoint, and an endpoint of the time interval may form the point in time in predetermined relation to the time interval.

Yet further preferably, the related data elements of the structure according to the present invention may be sequentially related.

A further embodiment of the present invention provides a database, comprising representations of quantities continuously accumulating over time, wherein the representations may be determined according to the methods of structures described above.

In yet another embodiment of the invention a computer readable storage medium is provided comprising program code for performing the method according to the invention when loaded into a computer system.

It is an advantage of the present invention that a partially available quantity may be calculated according to the capacities of a current planning situation. Machine downtimes and similar short-term changes of the situation are reflected in the availability (ATP) situation immediately.

Furthermore, by doing the calculations when an order for a quantity or quantities accumulating over time is created or a planning situation changes, there is less work to do when executing an availability (ATP) check. As a consequence the perfomance of online transactions may be increased.

It is a further advantage of the present invention to allow performing availability (ATP) checks on materials or products that may be produced in long-running process orders. This is particularly relevant in order forecast realistic delivery dates of purchase or sales orders, for instance.

The invention is further described in connection with the Figures, in which
- Fig. 1: shows, by way of example, a graph of a quantity continuously accumulating over time,
- Fig. 2: shows a schematic flow chart comprising steps carried out by a preferred embodiment of the present invention, and
- Fig. 3: shows, by way of example, a structure according to a preferred embodiment of the present invention.

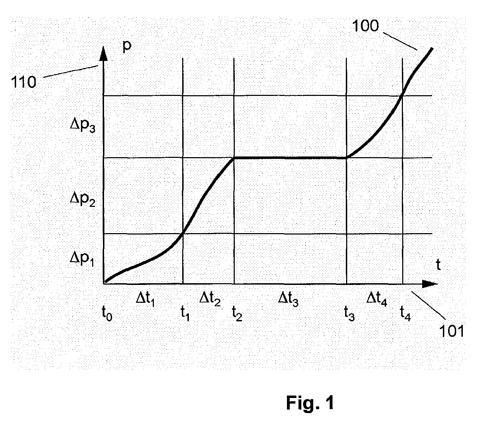

Fig. 1 shows, by way of example, a graph 100 of a quantity p continuously accumulating over time t. The quantity accumulated p on the vertical axis 110 is plotted against time t on the horizontal axis 101.

The graph 100 may, for instance, represent the quantity of raw material to be produced over a certain period of time. The raw material may be refined subsequently or concurrently in other production stages, for instance.

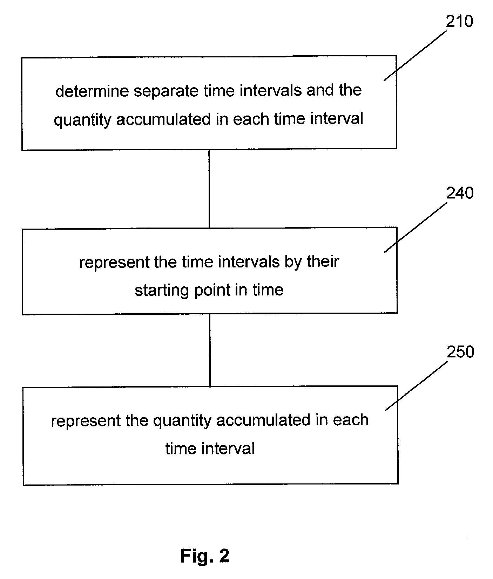

Fig. 2 shows a preferred embodiment of the method of the present invention. In the following the method will be described with reference to the quantity p continuously accumulating over time depicted in Fig. 1.

First separate time intervals are determined 210. By way of example, these time intervals are marked Δt₁, Δt₂, Δt₃, and Δt₄ on the time axis 101 in Fig. 1.

For each time interval a quantity accumulated in this interval may be determined 210. Such a quantity accumulated may be the volume of a liquid accumulated in a tank, for instance. By way of example, these quantities accumulated in time intervals Δt₁, Δt₂, Δt₃, and Δt₄ are marked Δp₁, Δp₂, Δp₃, and Δp₄ on the axis 110 denoting quantity in Fig. 1.

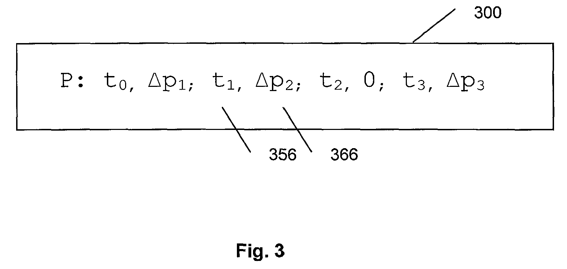

By way of example, a table 300 illustrating a structure according to a preferred embodiment of the present invention is shown in Fig. 3.

The series of time intervals may be represented 240 by means of the starting point of these time intervals and their respective duration. The time intervals may all have an identical predetermined duration. The duration of the time intervals may also be determined by predetermined durations, e.g. months, weeks, days etc.

The time intervals may also be represented by their midpoint, their endpoint or any other point in time which may be determined by a predetermined relation to the time interval.

It is to be noted that the series of time intervals need not to be contiguous. There may also be time intervals in which no quantity is accumulated. This is the case in the time interval Δt₃ of the example in Fig. 1, for instance. Empty time intervals in which no quantity is accumulated may be disregarded from a series of time intervals in later processing, i.e. upon conversion of a series of time intervals to a discrete time series.

The quantity accumulated in each time interval, which may be determined as described above, may be represented 250 by means of a quantity accumulated. In other words, such a representation 250 may comprise respective differences of quantities corresponding to time intervals.

The points in time representing separate time intervals and the quantities accumulated in the respective time intervals may be stored in related data elements, e.g. in a block of chain of buckets, corresponding to the time intervals.

The data elements may be sequentially related, e.g. according to time.

With reference to Fig. 3 a structure or table 300 representing a quantity P which is continuously accumulating over time may comprise a plurality of data elements wherein each data element comprises a point 356 in time representing a time interval and the quantity accumulated 366 in this time interval.

A structure 300 according to the present invention representing a quantity which is continuously accumulating over time 300 may be used in supply chain management (SCM). Such structures which may be used to asses the availability of a plurality of quantities continuously accumulating over time and will be referred to in the following as continuous ATP time series.

A continuous ATP time series may comprise a time series header and the time series itself. The header may contain information including pegarea, category, sub-location, version (or batch), attribute, and type of category. The time series header may be considered as primary key, when used in a data base for instance. The time series itself may comprise an array or chain of blocks comprising individual time series buckets. Each time series bucket may carry information comprising a time on a given grid, e.g. an ATP time, a requested quantity and a confirmed quantity. The ATP time may be regarded as a secondary key, when used in a data base for instance. An element (bucket) of an ATP time series may be uniquely determined by means of its primary and secondary key.

A plurality of continuous ATP time series may be included in a network of process orders, also called order net, for supply chain management or planning.

As soon as a process order may be created in an order net, the output of the process order is written into a continuous ATP time series according to the current planning situation. Each time a significant parameter of a planning situation changes, corresponding continuous ATP time series may be updated, independent of a planning run.

The writing of a process order into a continuous ATP time series may be carried out as follows: the definition of an ATP bucket raster of an actual pegarea may be read, whereby the ATP bucket raster may determine the number of ATP buckets in a predetermined timeinterval, e.g. per day, and may furtherv determine their corresponding starting point in time. The ATP bucket raster may also vary from pegarea to pegarea.

A continous ATP time series output knot of an order net may be projected onto the corresponding discrete bucket raster according to the corresponding starting point and/or endpoint in time. As a result a list of discrete ATP buckets may be obtained. Each individual bucket comprises the differences or partial quantities of the continuous ATP time series output knot, corresponding to the time interval or intervals of the ATP bucket.

After a continuous ATP time series has been converted to a discrete representation, for instance, each converted bucket of a continuous knot may be processed individually like a bucket of discrete output knot.

A continuous ATP time series output knot comprising a vanishing difference in quantity accumulated in the corresponding time interval may be disregarded and hence not converted to a bucket of a discrete output knot.

For performance reasons the conversion result or results of a conversion may be held in a transient buffer and/or may be persistently written into a working memory, for instance.

In this way the effort for converting a continuous knot of a continuous ATP time series may be reduced, e.g. when the termination time is changed by a scheduling process.

The present techniques can be implemented in digital electronic circuitry, or in computer hardware, firmware, software, or in combinations of them. Apparatus of the invention can be implemented in a computer program product tangibly embodied in a machine-readable storage device for execution by a programmable processor. Method steps according to the invention can be performed by a programmable processor executing a program of instructions to perform functions of the invention by operating on the basis of input data, and by generating output data. The invention may be implemented in one or several computer programs that are executable in a programmable system, which includes at least one programmable processor coupled to receive data from, and transmit data to, a storage system, at least one input device, and at least one output device, respectively. Computer programs may be implemented in a high-level or object-oriented programming language, and/or in assembly or machine code. The language or code can be a compiled or interpreted language or code. Processors may include general and special purpose microprocessors. A processor receives instructions and data from memories, in particular from read-only memories and/ or random access memories. A computer may include one or more mass storage devices for storing data; such devices may include magnetic disks, such as internal hard disks and removable disks; magneto-optical disks; and optical disks. Storage devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magneto-optical disks; and CD-ROM disks. Any of the foregoing can be supplemented by or incorporated in ASICs (application-specific integrated circuits).

The computer systems or distributed computer networks as mentioned above may be used, for example, for producing goods, delivering parts for assembling products, controlling technical or economical processes, or implementing telecommunication activities.

To provide for interaction with a user, the invention can be implemented on a computer system having a display device such as a monitor or LCD screen for displaying information to the user and a keyboard and a pointing device such as a mouse or a trackball by which the user can provide input to the computer system. The computer system can be programmed to provide a graphical or text user interface through which computer programs interact with users.

A computer may include a processor, memory coupled to the processor, a hard drive controller, a video controller and an input/output controller coupled to the processor by a processor bus. The hard drive controller is coupled to a hard disk drive suitable for storing executable computer programs, including programs embodying the present technique. The I/O controller is coupled by means of an I/O bus to an I/O interface. The I/O interface receives and transmits in analogue or digital form over at least one communication link. Such a communication link may be a serial link, a parallel link, local area network, or wireless link (e.g. an RF communication link). A display is coupled to an interface, which is coupled to an I/O bus. A keyboard and pointing device are also coupled to the I/O bus. Alternatively, separate buses may be used for the keyboard pointing device and I/O interface.

Other embodiments are in the scope of the following claims.

## Claims

1. A method for modeling a plurality of quantities continuously accumulating over time by performing for each quantity of the plurality of quantities the following steps:
determining separate time intervals and further determining the quantity accumulated in each time interval, and
representing the separate time intervals and the quantity accumulated in each time interval in a table comprising
a plurality of related data elements corresponding to the separate time intervals, each data element comprising a point in time in predetermined relation to the time interval and the quantity accumulated in the time interval.

2. The method of claim 1, wherein one of a starting point, a midpoint, and an endpoint of a time interval forms the point in time in predetermined relation to the time interval.

3. The method of claim 1 or 2, further comprising:
converting the representation of at least one quantity of the plurality of quantities continuously accumulating over time to a discrete representation.

4. The method of any of the preceding claims, wherein the related data elements are sequentially related.

5. The method of any of the preceding claims, further comprising: using the method for supply chain management.

6. A structure for modeling a quantity continuously accumulating over time, representing separate time intervals and the quantity accumulated in each time interval in a table comprising
a plurality of related data elements corresponding to the separate time intervals, each data element comprising
a point in time in predetermined relation to the time interval and the quantity accumulated in the time interval.

7. The structure of claim 6, wherein one of a starting point, a midpoint, and an endpoint of a time interval forms the point in time in predetermined relation to the time interval.

8. The structure of claim 6 or 7, wherein the related data elements are sequentially related.

9. A database comprising representations of quantities continuously accumulating over time,
the representations being determined according to the method of one of claims 1 to 5 or the structure of one of claims 6 to 8.

10. A computer-readable storage medium comprising program code for performing the method according to one of claims 1 to 5, when loaded into a computer system.
